# EUROPEAN PATENT SPECIFICATION

(11) **EP 4 460 840 B1**
(45) Date of publication and mention of the grant of the patent: **04.03.2026**
(21) Application number: 23705450.7
(22) Date of filing: 04.01.2023
(51) Int. Cl.: H01B 1/16, H01B 1/22

(54) **CURABLE ELECTRICAL JOINT COMPOSITION**
HÄRTBARE ELEKTRISCHE VERBINDUNGSZUSAMMENSETZUNG
COMPOSITION DE JOINT ÉLECTRIQUE DURCISSABLE

(30) Priority: 05.01.2022 US 202263296781 P
(43) Date of publication of application: 13.11.2024
(60) Divisional application: 25222890.3
(73) Proprietor: Tesla, Inc., Austin, TX 78725 (US)
(72) Inventor: HALL-SNYDER, Nathan, Austin, TX 78725 (US); SPAUGH, Sarah, Austin, TX 78725 (US); MALCOVITCH, John, Austin, TX 78725 (US)
(74) Representative: Liesegang, Eva
(86) International application number: PCT/US2023/010102
(87) International publication number: WO 2023/133132

(56) References cited:
- EP-A2- 1 143 775
- WO-A2-2012/071484
- KR-B1- 100 666 005
- US-A1- 2016 225 925
- US-A1- 2017 327 410

## Description

### BACKGROUND

### Field

The present invention relates generally to the joining of metallic electrical conductors, such as busbars and the like.

### Description of the Related Art

In the production of high current carrying products, it is desirable to reduce the electrical resistance between two large metal conductors, such as busbars, at fastened joints. Typically, preload from a steel bolt or stud is used to create a significant amount of force, bringing portions of the metals into intimate contact. Aluminum busbars are preferable due to lower cost. However, naturally occurring oxides, including the extremely tough aluminum oxide, often reduce the conductivity of the surface.

Traditional solutions have included nickel, copper, silver, and tin plating, which is an expensive, wasteful, and environmentally challenging process. Other solutions have included the application of petroleum grease over the joint; however, grease-like compositions accumulate on surfaces and equipment, posing a hazard and challenge to manufacturing operations. In addition, grease-like compositions cannot be reliably applied to the underside of busbar substrates, limiting their application or process sequence options.

US 2016/225925 A1 discloses a conductive paste composition that comprises (i) an inorganic powder comprising at least a conductive powder, (ii) at least one microgel polymer, and (iii) a solvent. The paste composition may be used in a process for manufacturing an electrical device comprising: preparing a substrate; applying the conductive paste onto the substrate in a preselected pattern; and heating the applied conductive paste to form a conductive structure that provides an electrode for connecting the device. The paste composition beneficially permits the formation of narrow, high aspect ratio features in the conductive structure.

EP 1 143 775 A2 discloses a microelectronic assembly wherein a semi-crystalline copolymer adhesive composition, preferably provided in the form of a film, is used to electrically interconnect a first circuit pattern on a first substrate to a second circuit pattern on a second substrate. The adhesive composition preferably includes a semi-crystalline copolymer comprising polyether and polyamide monomeric units, a tackifier, and conductive particles.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The present disclosure includes curable electrical joint compositions, methods of using the compositions, and metallic electrical conductors (e.g., busbars) comprising the compositions.

In one aspect, a curable electrical joint composition is described. The composition comprises: at least one electrically conductive metal selected from the group consisting of zinc, tin, cadmium, nickel, platinum, gold, silver, copper, aluminum, palladium, rhodium, stainless steel and alloys thereof; and at least one curable polymer.

In some embodiments, the composition comprises the electrically conductive metal at a concentration of about 40-60 wt.%. In some embodiments, the at least one electrically conductive metal is a powder with a D₅₀ particle size distribution of about 1-20 µm. In some embodiments, the at least one electrically conductive metal has a D₅₀ particle size distribution of about 5-15 µm. In some embodiments, the composition comprises a low durometer elastomer. In some embodiments, the curable electrical joint composition has a viscosity of about 10,000-250,000 cps. In some embodiments, the composition has a viscosity of about 100,000-200,000 cps.

In some embodiments, the curable electrical joint composition further comprises a curing additive selected from the group consisting of a catalyst, hardener, a crosslinker, a drying agent, a curing metal, a curing peroxide, and combinations thereof. In some embodiments, the curable electrical joint composition comprises platinum. In some embodiments, the curable electrical joint composition comprises a curing temperature of about 20-30 °C.

In another aspect, an electrical joint assembly is described. The assembly comprises: two or more metal conductors; and a curable electrical joint composition disposed between the two or more metal conductors. In some embodiments, the two or more metal conductors comprise aluminum.

In another aspect, a cured electrical joint assembly is described. The assembly comprises, two or more metal conductors; and a cured electrical joint composition disposed between the two or more metal conductors, wherein the cured electrical joint composition comprises: at least one electrically conductive metal selected from the group consisting of zinc, tin, cadmium, nickel, platinum, gold, silver, copper, aluminum, palladium, rhodium, stainless steel and alloys thereof; and at least one cured polymer.

In some embodiments, the cured electrical joint composition comprises an electrical resistance of about 150-1,500 µOhms at a bolt clamp load of about 1-4 kN. In some embodiments, the curable electrical joint composition comprises an electrical resistance of at most about 10 µOhms at a bolt clamp load of about 7-10 kN. In some embodiments, the device is selected from the group consisting of a vehicle powertrain, an energy storage device, a solar device, and a server electrical components device.

In another aspect, a method of fastening a first metal conductor to a second metal conductor is described. The method comprises: applying a curable electrical joint composition to a first metal conductor; and contacting a second metal conductor to the curable electrical joint composition and the first metal conductor.

In some embodiments, the methods further comprise compressing the curable electrical joint composition between the first metal conductor and the second metal conductor. In some embodiments, compressing comprising applying about 7-10 kN of force. In some embodiments, the curable electrical joint composition is applied through a squeeze-out application, a screen, a stencil, a dispensing application, dip coating, spray coating, a nozzle, an aerosol, an ink jet, a gravure, flexographic printing, manually, and combinations thereof. In some embodiments, the curable electrical joint composition is applied in a dot array on the surface of at least one of the two or more metal conductors. In yet some embodiments, the dot array ranges between 10 microns and 12 microns. In some embodiments, the curable electrical joint composition is applied to the underside of at least one of the two or more metal conductors without spillage, bleeding, dripping, or settling.

In another aspect, a method of curing an electrical joint assembly is described. The method comprises applying at least one of heat, light, pressure, and combinations thereof to the electrical joint assembly. In some embodiments, the curing is performed at a temperature of about 20-30 °C. In some embodiments, the method further comprises bolting the first metal conductor to the second metal conductor.

### BRIEF DESCRIPTION OF THE DRAWINGS

FIG. 1 is a graph showing the relationship between force and resistance of the cured electrical joint composition disclosed herein relative to other joining compositions.
FIG. 2A is a schematic depiction of a cross-sectional view of a dot array dispersion of the curable electrical joint composition before the metallic electrical conductors are bolted, according to one embodiment.
FIG. 2B is a schematic depiction of a cross-sectional view of the even spreading of the curable electrical joint composition after the metallic electrical conductors are bolted, according to one embodiment.
FIG. 3 is a graph showing the force vs resistance of the cured electrical joint composition compared to a commercial composition, according to one embodiment.
FIG. 4A is a photographic image of a dot array dispersion of the curable electrical joint composition before the metallic electrical conductors are bolted, according to one embodiment.
FIG. 4B is a photographic image of the curable electrical joint composition after the metallic electrical conductors are bolted, according to one embodiment.

### DETAILED DESCRIPTION

The present disclosure relates to a curable electrical joint composition for the joining of metallic electrical conductors, such as busbars, while reducing the electrical resistance between two metal conductors and reducing the number of processes steps and material wastage. In some embodiments, the curable electrical joint composition includes one or more electrically conductive metals and a curable polymer.

### Electrically Conductive Metals

As used herein, "electrically conductive metal" means an element of any one of Groups 1 to 13 of the Periodic Table of the Elements plus tin and lead from Group 14, antimony from Group 15, and lanthanides and actinides, or a metal alloy of any two or more such elements. In some embodiments, the element or metal alloy may have a volume resistivity (ρ) at 20 °C less than 0.0001 Ohm-centimeter and an electrical conductivity (K) at 20 °C greater than 1×10⁶ Siemens per meter (S/m). Examples of such elements are silver, copper, gold, aluminum, calcium, molybdenum, zinc, lithium, tungsten, nickel, iron, palladium, platinum, tin, lead, titanium, mercury, and blends thereof. Examples of such metal alloys are brass (a metal alloy of copper and zinc), bronze (a metal alloy of copper and tin), 67Cu33Zn, carbon steel, grain oriented electrical steel, MANGANIN (trademark name for a metal alloy of formula Cu86Mn12Ni2 by Isabellenhütte Heusler GmbH & Co. K G, Dillenburg, Germany), constantin (a metal alloy of 55% copper and 45% nickel), nichrome (a metal alloy of nickel, chromium, and optionally iron), and blends thereof.

In some embodiments, the electrically conductive metal may be, but not limited to, zinc, tin, cadmium, nickel, platinum, gold, silver, copper, aluminum, palladium, rhodium, stainless steel and alloys thereof. In some embodiments, the electrically conductive metal comprises or is zinc. A single electrically conductive metal may be used, or a plurality of electrically conductive metals may be used.

In some embodiments, the curable electrical joint composition comprises an electrically conductive metal of, of about, of at least, or of at least about, 25 wt. %, 30 wt. %, 35 wt. %, 40 wt. %, 41 wt. %, 42 wt. %, 43 wt. %, 44 wt. %, 45 wt. %, 46 wt. %, 47 wt. %, 48 wt. %, 49 wt. %, 50 wt. %, 55 wt. %, 60 wt. %, 65 wt. %, 70 wt. %, 75 wt. %, 80 wt. %, 85 wt. %, or 90 wt. %, or any range of values therebetween. For example, in some embodiments, the amount of electrically conductive metal in the curable electrical joint composition is or is about in any one of the following ranges: 20-40 wt. %, 40-60 wt. %, 60-80 wt. %, 45-55 wt. %, 46-54 wt. %, 47-53 wt. %, 48-52 wt. %, or 49-51 wt. % (based on total weight of the composition).

The electrically conductive metal used in the present disclosure may be supplied as finely divided particles having any one or more of the following morphologies: a powder form, a flake form, a spherical form, a granular form, a nodular form, a crystalline form, other irregular forms, or mixtures thereof. In some embodiments, the electrically conductive metal may be a metal powder.

In some embodiments, the electrically conductive metal has a D₅₀ particle size distribution of, or of about, 0.1 µm, 0.15 µm, 0.2 µm, 0.3 µm, 0.4 µm, 0.5 µm, 0.8 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 40 µm, 50 µm, 75 µm, 100 µm, 125 µm, 150 µm or 200 µm, or any range of values therebetween. In some embodiments, the electrically conductive metal has a mean particle size of, or of about, 0.1 µm, 0.15 µm, 0.2 µm, 0.3 µm, 0.4 µm, 0.5 µm, 0.8 µm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 40 µm, 50 µm, 75 µm, 100 µm, 125 µm, 150 µm or 200 µm, or any range of values therebetween.

In some embodiments, the metal powder punctures the busbar's native oxide layer. In further embodiments, the metal powder prevents the galvanic corrosion of the metallic electrical conductors.

### Curable Polymer and Cured Polymer

The curable polymer may be or comprise an elastomer, such as silicone, polybutene, styrenic block polymer, and combinations thereof. In some embodiments, the curable polymer may be or comprise a low durometer elastomer. In some embodiments, the curable polymer is configured to form a matrix in which elements (e.g., the electrically conductive metal) may be suspended. In some embodiments, the curable polymer comprises or is a silicone matrix. In further embodiments, the curable polymer (e.g., elastomer) provides a durable seal which prevents further oxidation and contamination of the joint.

In some embodiments, the curable electrical joint composition comprises a curable polymer of, of about, of at least, or at least about, 25 wt. %, 30 wt. %, 35 wt. %, 40 wt. %, 41 wt. %, 42 wt. %, 43 wt. %, 44 wt. %, 45 wt. %, 46 wt. %, 47 wt. %, 48 wt. %, 49 wt. %, 50 wt. %, 55 wt. %, 60 wt. %, 65 wt. %, 70 wt. %, 75 wt. %, 80 wt. %, 85 wt. %, or 90 wt. %, or any range of values therebetween. For example, in some embodiments, the amount of curable polymer in the curable electrical joint composition is or is about in any one of the following ranges: 20-40 wt. %, 40-60 wt. %, 60-80 wt. %, 45-55 wt. %, 46-54 wt. %, 47-53 wt. %, 48-52 wt. %, or 49-51 wt. % (based on total weight of the composition).

After curing of the curable polymer, a cured polymer is formed. The cured polymer of the present disclosure provides significant manufacturing process advantages compared to commercially available non-curable joint compositions. The cured polymer provides a durable seal to prevent further oxidation and contamination of the joint. In addition, the cured polymer of the present disclosure exhibit high resistance, until the joints are fully tightened.

### Curing Additive

In some embodiments, the curable electrical joint composition comprises a curing additive that aids in curing the composition. In some embodiments, the curing additive may be selected from the group consisting of a catalyst, hardener, a crosslinker, a drying agent, and combinations thereof. In some embodiments, the catalyst is a thermal catalyst, a photochemical catalyst, and combinations thereof. In some embodiments, the curing additive comprises a curing metal and/or a curing peroxide. In some embodiments, the curing metal comprises platinum. In some embodiments, the crosslinker comprises an epoxy resin. In some embodiments, the thermal catalyst comprises a heat stabilizer. In some embodiments, the photochemical catalyst comprises a UV absorber. In some embodiments, the photochemical catalyst comprises a light stabilizer.

### Additional Additives

In some embodiments, the curable electrical joint composition comprises an additional additive. In some embodiments, the additional additive is selected from the group consisting of a pigment, a dye, a surfactant, a pigment dispersion aid, a levelling agent, a wetting agent, an emulsifying agent, an anti-cratering agent, an antifoaming agent, an anti-sagging agent, an antioxidant, a filler, and combinations thereof.

### Curable Electrical Joint Composition

The curable electrical joint composition comprises an electrically conductive metal and a curable polymer. In some embodiments, the electrically conductive metal (e.g., metal powders) is suspended in a polymer matrix (e.g., an elastomer matrix). In some embodiments, the electrically conductive metal (e.g., metal powders) are in a matrix form. In some embodiments, the curable electrical joint composition has a viscosity of, of about, of at least, or of at least about, 1,000 cps, 2,000 cps, 3,000 cps, 4,000 cps, 5,000 cps, 6,000 cps, 7,000 cps, 8,000 cps, 9,000 cps, 10,000 cps, 11,000 cps, 12,000 cps, 13,000 cps, 14,000 cps, 15,000 cps, 16,000 cps, 17,000 cps, 18,000 cps, 19,000 cps, 20,000 cps, 21,000 cps, 22,000 cps, 23,000 cps, 24,000 cps, 25,000 cps, 26,000 cps, 27,000 cps, 28,000 cps, 29,000 cps, 30,000 cps, 40,000 cps, 50,000 cps, 60,000 cps, 70,000 cps, 80,000 cps, 90,000 cps, 100,000 cps, 110,000 cps, 120,000 cps, 130,000 cps, 140,000 cps, 150,000 cps, 160,000 cps, 170,000 cps, 180,000 cps, 190,000 cps, 200,000 cps, 210,000 cps, 220,000 cps, 230,000 cps, 240,000 cps, or 250,000 cps, or any range of values therebetween. For example, in some embodiments, the viscosity can be about 1,000 cps to about 10,000 cps, about 10,000 cps to about 25,000 cps, about 50,000 cps to about 150,000 cps, or about 100,000 cps to about 250,000 cps.

In some embodiments, the curable electrical joint composition is configured to provide a metal (e.g., metal conductors, metal plates) protection against corrosion and oxidation. In some embodiments, the curable electrical joint composition is configured to provide metal protection for electrical conductors, such as copper and aluminum. In further embodiments, the cured electrical composition exhibits extreme durability under harsh environmental conditions. In some embodiments, the cured electrical composition is configured to provide superior adhesion on a range of metal substrate types compared to other joining compositions. In some embodiments, the cured electrical composition is configured to provide superior shear strength relative to other joining compositions.

### Cured Electrical Joint Material and Curing Methods thereof

After curing of the electrical joint composition, a cured electrical joint material is formed. The cured electrical joint material comprises the electrically conductive metal and a cured polymer. In some embodiments, the cured electrical joint material comprises additional compounds and/or elements included in the curable electrical joint composition prior to curing (e.g., curing additive). In some embodiments, the cured electrical joint material comprises a tensile adhesion strength of 0.5 N/mm², 1 N/mm², 2 N/mm², 3 N/mm², 4 N/mm², 5 N/mm², 6 N/mm², 7 N/mm², 8 N/mm², 9 N/mm², 10 N/mm², 11 N/mm², 12 N/mm², 13 N/mm², 14 N/mm², 15 N/mm², 16 N/mm², 17 N/mm², 18 N/mm², 19 N/mm², 20 N/mm², 21 N/mm², 22 N/mm², 23 N/mm², 24 N/mm², 25 N/mm², 26 N/mm², 27 N/mm², 28 N/mm², 29 N/mm², 30 N/mm², 35 N/mm², 40 N/mm², 45 N/mm², or 50 N/mm², or any range of values therebetween. In some embodiments, the cured electrical joint material comprises a shear strength of 0.5 N/mm², 1 N/mm², 2 N/mm², 3 N/mm², 4 N/mm², 5 N/mm², 6 N/mm², 7 N/mm², 8 N/mm², 9 N/mm², 10 N/mm², 11 N/mm², 12 N/mm², 13 N/mm², 14 N/mm², 15 N/mm², 16 N/mm², 17 N/mm², 18 N/mm², 19 N/mm², 20 N/mm², 21 N/mm², 22 N/mm², 23 N/mm², 24 N/mm², 25 N/mm², 26 N/mm², 27 N/mm², 28 N/mm², 29 N/mm², 30 N/mm², 35 N/mm², 40 N/mm², 45 N/mm², or 50 N/mm², or any range of values therebetween.

Curing of the electrical joint composition to the cured electrical joint material may be performed by curing the curable polymer. In some embodiments, curing is performed by imparting heat, light, pressure, or the like, to increase the adhesion force of the electrical joint material. In some embodiments, curing is performed through the use of a thermal catalyst or photochemical catalyst. In some embodiments, the curable electrical joint composition is cured at room temperature. In some embodiments, heat is applied to the electrical joint composition to cure or aid in the curing process. In some embodiments, curing is performed at a temperature of, of about, of at least, or of at least about, 20 °C, 21 °C, 22 °C, 23 °C, 24 °C, 25 °C, 26 °C, 27 °C, 28 °C, 29 °C, 30 °C, 31 °C, 32 °C, 33 °C, 34 °C, 35 °C, 40 °C, 45 °C, 50 °C, 55 °C, 60 °C, 65 °C, 70 °C, 75 °C, 80 °C, 85 °C, 90 °C, 95 °C, 100 °C, 110 °C, 120 °C, 130 °C, 140 °C, 150 °C, 160 °C, 170 °C, 180 °C, 190 °C, or 200 °C, or any range of values therebetween. In some embodiments, the curable electrical joint composition is exposed to oxygen gas (e.g., air) to cure or aid in curing the composition. In some embodiments, the curable electrical joint composition is exposed to light (e.g., ultraviolet (UV) light) to cure or aid in curing the composition. In some embodiments, curing is performed in the absence of heat, light, or the like. In some embodiments, curing is performed under atmospheric pressure. In some embodiments, curing is performed under a pressure of 2 atm, 3 atm, 4 atm, 5 atm, 6 atm, 7 atm, 8 atm, 9 atm, 10 atm, 11 atm, 12 atm, 13 atm, 14 atm, 15 atm, 16 atm, 17 atm, 18 atm, 19 atm, 20 atm, 25 atm, 30 atm, 35 atm, 40 atm, 45 atm, 50 atm, or 55 atm, or any range of values therebetween.

In some embodiments, the curable electrical joint composition comprises a first part comprising the electrically conductive metal and the curable polymer, and a second part comprising the curing additive. In some embodiments, the first part of the curable electrical joint composition and the second part of the curable electrical joint composition are stored separately. In some embodiments, the curing process initiates once the curable polymer contacts the curing additive. In some embodiments, the curing process initiates once the first part of the curable electrical joint composition and the second part of the curable electrical joint composition are mixed together. In some embodiments, the curing process initiates once the first part of the curable electrical joint composition and the second part of the curable electrical joint composition are mixed together and exposed to light.

### Electrical Joint Assembly

In some embodiments, the electrical joint assembly comprises the curable electrical joint material disposed between two or more metal conductors. In some embodiments, the curable electrical joint material is cured between two or more metal conductors. In some embodiments, the electrical joint assembly comprises the cured electrical joint material disposed between the two or more metal conductors. In some embodiments, the electrical joint material fastens the two or more metal conductors together. In some embodiments, the curable electrical joint material is cured after being disposed and spread between the two or more metal conductors. In other embodiments, the curable electrical joint material is cured after the two or more metal conductors are bolted together. In some embodiments, the metal conductors are busbars. In some embodiments, the metal conductors are bare aluminum.

In some embodiments, the electrical joint assembly carries high electrical currents. In some embodiments, the electrical joint material reduces the electrical resistance between two metal conductors at the fastened joints. In some embodiments, a bolt clamp load is applied the electrical joint material of, of about, of at least, or at least about, 1 kN, 2 kN, 3 kN, 4 kN, 5 kN, 6 kN, 7 kN, 8 kN, 9 kN, 10 kN, 11 kN, 12 kN, 13 kN, 14 kN, 15 kN, 16 kN, 17 kN, 18 kN, 19 kN, or 20 kN, or or any range of values therebetween. For example, in some embodiments, the bolt clamp load applied the electrical joint material is or is about in any one of the following ranges: 1-16 kN, 2-15 kN, 3-14 kN, 4-13 kN, 5-12 kN, 6-11 kN, 7-10 kN, or 8-9 kN.

### Application Methods

Some embodiments of the present application are related to methods for applying the curable electrical joint composition disclosed herein. The curable electrical joint composition may be applied to the joint surface(s) by various methods of deposition. Examples of suitable methods include printing through screen or stencil, dispensing, dip coating, spray coating, or other methods such as nozzle, aerosol, ink jet, gravure, flexographic printing, or manually.

In some embodiments, the curable electrical joint composition can be applied through a squeeze-out application. In some embodiments, it has been observed that the squeeze-out application of the curable electrical joint composition purges dust and other foreign objects on the joint by pushing any trapped debris to the extremities of the joint during the bolting operation. In some embodiments, the squeeze-out application of the curable electrical joint composition purges the joint of dust and other foreign objects. Some embodiments of the methods disclosed herein are free from plating electrical joints. In some embodiments of the methods disclosed herein, the methods of applying the curable electrical joint composition to one or more electrical joints are free from plating the one or more electrical joints.

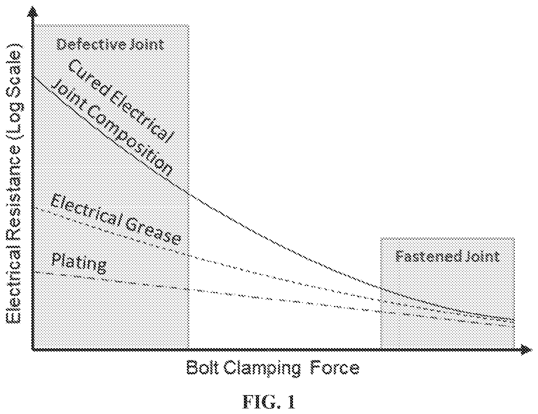

Low-force contact of plated materials can lead to a resistance sufficiently low enough to pass rapid manufacturing tests. However, such low-force contact of plated materials ultimately fail due to the insufficient clamp load. As shown in FIG. 1, it has been observed that the cured electrical joint composition disclosed herein exhibits high resistance until the bolt is fully tightened, as compared with other joining compositions and methods. Furthermore, after a bolt clamping force is applied to the metal conductors, the electrical resistance between two or more metal conductors is significantly reduced and compared to other joining compositions and methods. As illustrated in FIG. 1, in some embodiments, the cured electrical joint composition disclosed herein provides high resistance before a bolt clamping force is applied to two or more metal conductors. After a bolt clamping force is applied, the two or more metal conductors fastened by the cured electrical joint composition exhibit similar or lower electrical resistance as commercially available electrical grease or other fastening methods, such as plating. Such superior advantages exhibited by the cured electrical joint composition allow for the to detection of an electrical joint with insufficient clamp load during the manufacturing processes, and thus, making detection of manufacturing defects more efficacious.

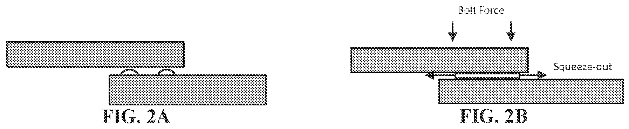

In some embodiments, the curable electrical joint composition can be dispensed in a dot array to achieve even spreading. In some embodiments, the dots can be applied at high aspect ratios. In some embodiments, the curable electrical joint composition is dispensed in a range of about 5 microns to about 500 microns. In some embodiments, the curable electrical joint composition is dispensed in a range of about 10 microns to about 250 microns. In some embodiments, the curable electrical joint composition is dispensed in a range of about 10 microns to about 12 microns. As shown in FIGS. 2A and 2B, it has been observed that the application of high aspect ratio dots improved the performance of the curable electrical joint composition due to the high shear forces induced during compression.

In some embodiments, the curable electrical joint composition can be applied to the underside of a busbar without exhibiting spillage, bleeding, dripping, or settling. In some embodiments, the curable electrical joint composition allows for the assembly of metal conductors or busbars at any angle. In some embodiments, the curable electrical joint composition can be applied in any orientation of a joint or busbar. In further embodiments, the curable electrical joint composition can be applied before final assembly and joint fastening.

In some embodiments, the curable electrical joint composition is applied as a tape. For example, in some embodiments, the curable electrical joint composition is applied as a film with single or bi-facial adhesive with metal embedded in it. In further embodiments, the tape comprises a backing carrier film.

In some embodiments, the curable electrical joint composition is applied to bare metallic electrical conductors. In some embodiments, the metallic electrical conductors are not plated. In some embodiments, the curable electrical joint composition is applied to bare copper. In some embodiments, the curable electrical joint composition is applied to bare aluminum.

### Devices and Applications

The curable electrical joint composition described herein, and methods of using the same, may be utilized to a wide range of applications and devices. In some embodiments, the electrical joint composition is employed in circumstances where low electrical resistance is needed between busbars. In some embodiments, the electrical joint composition can be employed for fastening vehicle powertrain, energy storage (e.g., battery), solar, and server electrical components.

### EXAMPLES

Curable electrical joint composition of the present disclosure may be prepared and utilized as disclosed herein. Additional embodiments are disclosed in further detail in the following examples, which are not in any way intended to limit the scope of the claims.

### Example 1 - Electrical Resistance of the Curable Electrical Joint Composition Relative to Force

The curable electrical joint composition disclosed herein provide superior advantages than commercially available electrical grease. In this example, a curable electrical joint composition sample was prepared including zinc powder with a D₅₀ particle size distribution of 10 µm, a curable low-durometer silicone matrix, and a curing metal of platinum. The curable electrical joint composition sample comprised the zinc powder at a concentration of about 50 wt.%. The curable electrical joint composition was applied and spread between two metal conductors. The metal conductors comprised bare aluminum busbars. The curable electrical joint composition was cured in the presence of oxygen gas (e.g., air), forming a cured electrical joint assembly. The resistance of the cured electrical joint composition was recorded over a range of forces applied to the cured electrical joint assembly.

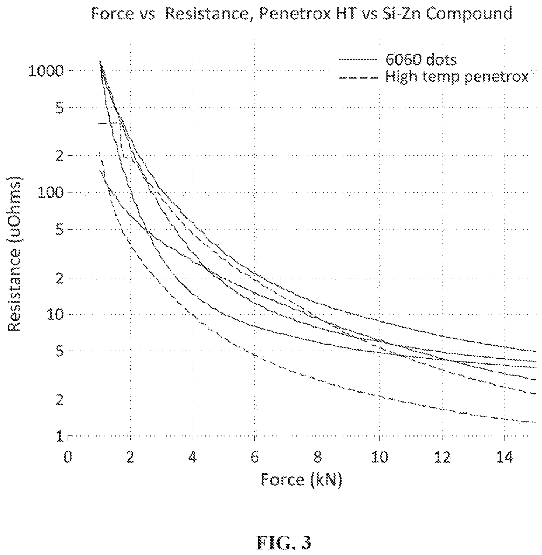

FIG. 3 provides a graph of force vs resistance of the cured electrical composition according to one embodiment, compared to commercially available products. For example, at a bolt clamp load of about 1 kN to about 4 kN, the cured electrical composition disclosed herein exhibits a resistance of about 150 µOhms to about 1,500 µOhms, while grease-like compositions exhibit a resistance of about 200 µOhms within the same clamp load. Such high resistance before full tightening provides superior opportunities for detection of insufficiently tightened joints. In addition, at a bolt clamp load of about 7 kN to about 10 kN, the cured electrical composition disclosed herein exhibits a resistance of about 2 µOhms to about 10 µOhms, similar to that of grease-like compositions.

### Example 2 - Dot Application Process of the Curable Electrical Joint Composition

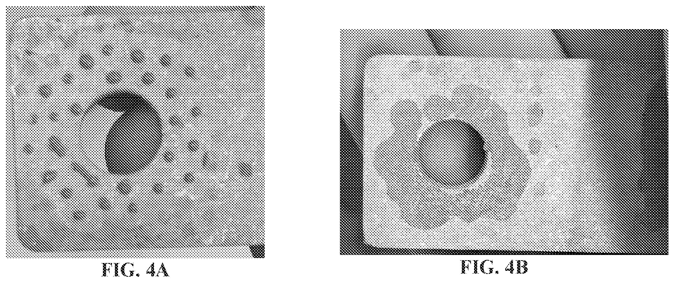

The application process of the curable electrical joint composition further improved the fastening performance of the curable electrical joint composition, wherein a high aspect ratio dot or spot application of the curable electrical joint composition provided improved fastening performance due to the high shear forces induced during compression. FIG. 4A shows a photographic image of a dot array dispersion of the curable electrical joint composition sample of Example 1 before the metallic electrical conductors were bolted. After the metallic electrical conductors were bolted, the curable electrical joint composition evenly spread over the surface of the metallic electrical conductors, as shown in FIG. 4B.

## Claims

1. A curable electrical joint composition, comprising:
at least one electrically conductive metal selected from the group consisting of zinc, tin, cadmium, nickel, platinum, gold, silver, copper, aluminium palladium, rhodium, stainless steel and alloys thereof; and
at least one curable polymer,
wherein the curable electrical joint composition has a viscosity of about 10,000-250,000 cps.

2. The composition of Claim 1, wherein the composition comprises the electrically conductive metal at a concentration of about 40-60 wt.%.

3. The composition of Claim 1 or 2, wherein the at least one electrically conductive metal is a powder with a D₅₀ particle size distribution of about 1-20 µm; preferably wherein the at least one electrically conductive metal has a D₅₀ particle size distribution of about 5-15 µm.

4. The composition of any one of Claims 1-3, wherein the composition comprises a low durometer elastomer; or wherein the composition has a viscosity of about 100,000-200,000 cps.

5. The composition of any one of Claims 1-4, wherein the curable electrical joint composition further comprises a curing additive selected from the group consisting of a catalyst, hardener, a crosslinker, a drying agent, a curing metal, a curing peroxide, and combinations thereof; preferably wherein the curable electrical joint composition comprises platinum.

6. The composition of any one of Claims 1-5, wherein the curable electrical joint composition comprises a curing temperature of about 20-30 °C, or
wherein the curable electrical joint composition, after curing, comprises a tensile adhesion strength between 0.5 N/mm² and 50 N/mm².

7. An electrical joint assembly, comprising:
two or more metal conductors; and
the curable electrical joint composition of any one of Claims 1-6 disposed between the two or more metal conductors;
preferably wherein the two or more metal conductors comprise aluminum.

8. A cured electrical joint assembly, comprising,
two or more metal conductors; and
the curable electrical joint composition of one of the claims 1 to 6, cured and disposed between the two or more metal conductors,;
wherein the cured electrical joint composition fastens the two or more metal conductors together.

9. The cured electrical joint assembly of Claim 8, wherein the cured electrical joint composition comprises an electrical resistance of about 150-1,500 µOhms at a bolt clamp load of about 1-4 kN; or wherein the cured electrical joint composition comprises an electrical resistance of at most about 10 µOhms at a bolt clamp load of about 7-10 kN.

10. A device comprising the cured electrical joint assembly of Claim 8 or 9, wherein the device is selected from the group consisting of a vehicle powertrain, an energy storage device, a solar device, and a server electrical components device.

11. A method of fastening a first metal conductor to a second metal conductor, comprising:
applying the curable electrical joint composition of any one of Claims 1-6 to a first metal conductor; and
contacting a second metal conductor to the curable electrical joint composition and the first metal conductor.

12. The method of Claim 11, further comprising compressing the curable electrical joint composition between the first metal conductor and the second metal conductor; preferably wherein compressing comprising applying about 7-10 kN of force.

13. The method of Claim 11, wherein the curable electrical joint composition is applied through a squeeze-out application, a screen, a stencil, a dispensing application, dip coating, spray coating, a nozzle, an aerosol, an ink jet, a gravure, flexographic printing, manually, and combinations thereof; preferably wherein the curable electrical joint composition is applied in a dot array on the surface of at least one of the two or more metal conductors; more preferably wherein the dot array ranges between 10 microns and 12 microns.

14. A method of curing the electrical joint assembly of Claim 7, comprising applying at least one of heat, light, pressure, and combinations thereof to the electrical joint assembly; preferably wherein the curing is performed at a temperature of about 20-30 °C.

15. The method of any one of Claims 11-13, further comprising bolting the first metal conductor to the second metal conductor.

## Patentansprüche

1. Aushärtbare Zusammensetzung für elektrische Verbindungen, die Folgendes aufweist:
mindestens ein elektrisch leitfähiges Metall, das aus der Gruppe ausgewählt ist, die aus Zink, Zinn, Cadmium, Nickel, Platin, Gold, Silber, Kupfer, Aluminium, Palladium, Rhodium, Edelstahl und deren Legierungen besteht; und
mindestens ein aushärtbares Polymer,
wobei die aushärtbare Zusammensetzung für elektrische Verbindungen eine Viskosität von etwa 10.000-250.000 cps aufweist.

2. Zusammensetzung nach Anspruch 1, wobei die Zusammensetzung das elektrisch leitfähige Metall mit einer Konzentration von etwa 40-60 Gew.-% umfasst.

3. Zusammensetzung nach Anspruch 1 oder 2, wobei das mindestens eine elektrisch leitfähige Metall ein Pulver mit einer D₅₀-Partikelgrößenverteilung von etwa 1 bis 20 µm ist; wobei das mindestens eine elektrisch leitfähige Metall vorzugsweise eine D₅₀-Partikelgrößenverteilung von etwa 5-15 µm aufweist.

4. Zusammensetzung nach einem der Ansprüche 1-3, wobei die Zusammensetzung ein Elastomer mit geringer Härte aufweist; oder wobei die Zusammensetzung eine Viskosität von etwa 100.000-200.000 cps aufweist.

5. Zusammensetzung nach einem der Ansprüche 1-4, wobei die aushärtbare Zusammensetzung für elektrische Verbindungen ferner ein Härtungsadditiv aufweist, das aus der Gruppe ausgewählt ist, die aus einem Katalysator, einem Härtemittel, einem Vernetzungsmittel, einem Trocknungsmittel, einem Härtungsmetall, einem Härtungsperoxid und Kombinationen davon besteht; wobei die aushärtbare Zusammensetzung für elektrische Verbindungen vorzugsweise Platin aufweist.

6. Zusammensetzung nach einem der Ansprüche 1-5, wobei die aushärtbare Zusammensetzung für elektrische Verbindungen eine Härtungstemperatur von etwa 20-30 °C aufweist, oder
wobei die aushärtbare Zusammensetzung für elektrische Verbindungen nach dem Härten eine Haftzugfestigkeit zwischen 0,5 N/mm² und 50 N/mm² aufweist.

7. Elektrische Verbindungsbaugruppe, die Folgendes aufweist:
zwei oder mehr Metallleiter; und
die aushärtbare Zusammensetzung für elektrische Verbindungen nach einem der Ansprüche 1-6, die zwischen den zwei oder mehr Metallleitern angeordnet ist;
wobei vorzugsweise die zwei oder mehr Metallleiter Aluminium aufweisen.

8. Ausgehärtete elektrische Verbindungsbaugruppe, die Folgendes aufweist,
zwei oder mehr Metallleiter; und
die aushärtbare Zusammensetzung für elektrische Verbindungen nach einem der Ansprüche 1-6, die zwischen den zwei oder mehr Metallleitern ausgehärtet und angeordnet ist;
wobei die ausgehärtete Zusammensetzung für elektrische Verbindungen die zwei oder mehr Metallleiter aneinander befestigt.

9. Ausgehärtete elektrische Verbindungsbaugruppe nach Anspruch 8, wobei die ausgehärtete Zusammensetzung für elektrische Verbindungen einen elektrischen Widerstand von etwa 150-1.500 µOhm bei einer Bolzenklemmkraft von etwa 1-4 kN aufweist; oder wobei die ausgehärtete Zusammensetzung für elektrische Verbindungen einen elektrischen Widerstand von höchstens etwa 10 µOhm bei einer Bolzenklemmkraft von etwa 7-10 kN aufweist.

10. Vorrichtung, die die ausgehärtete elektrische Verbindungsbaugruppe nach Anspruch 8 oder 9 aufweist, wobei die Vorrichtung aus der Gruppe ausgewählt ist, die aus einem Antriebsstrang eines Fahrzeugs, einer Energiespeichervorrichtung, einer Solarvorrichtung und elektrischen Komponenten einer Servervorrichtung besteht.

11. Verfahren zum Befestigen eines ersten Metallleiters an einem zweiten Metallleiter, umfassend:
Aufbringen der aushärtbaren Zusammensetzung für elektrische Verbindungen nach einem der Ansprüche 1-6 auf einem ersten Metallleiter; und
Zusammenbringen eines zweiten Metallleiters mit der aushärtbaren Zusammensetzung für elektrische Verbindungen und dem ersten Metallleiter.

12. Verfahren nach Anspruch 11, ferner umfassend das Komprimieren der aushärtbaren Zusammensetzung für elektrische Verbindungen zwischen dem ersten Metallleiter und dem zweiten Metallleiter; wobei das Komprimieren vorzugsweise das Aufbringen einer Kraft von 7-10 kN umfasst.

13. Verfahren nach Anspruch 11, wobei die aushärtbare Zusammensetzung für elektrische Verbindungen durch eine Pressapplikation, ein Sieb, eine Schablone, eine Dosierapplikation, Tauchbeschichtung, Sprühbeschichtung, eine Düse, ein Aerosol, einen Tintenstrahl, Tiefdruck, Flexodruck, von Hand und Kombinationen davon aufgebracht wird; wobei die aushärtbare Zusammensetzung für elektrische Verbindungen vorzugsweise in einem Punktarray auf der Oberfläche mindestens eines der zwei oder mehr Metallleiter aufgebracht wird; wobei das Punktarray besonders bevorzugt im Bereich zwischen 10 Mikron und 12 Mikron liegt.

14. Verfahren zum Aushärten der elektrischen Verbindungsbaugruppe nach Anspruch 7, umfassend das Aufbringen von mindestens einem von Wärme, Licht, Druck und Kombinationen davon auf die elektrische Verbindungsbaugruppe; wobei das Aushärten vorzugsweise bei einer Temperatur von etwa 20-30 °C durchgeführt wird.

15. Verfahren nach einem der Ansprüche 11-13, ferner umfassend das Verbolzen des ersten Metallleiters mit dem zweiten Metallleiter.

## Revendications

1. Composition de joint électrique durcissable, comprenant :
au moins un métal électriquement conducteur choisi dans le groupe constitué par le zinc, l'étain, le cadmium, le nickel, le platine, l'or, l'argent, le cuivre, l'aluminium, le palladium, le rhodium, l'acier inoxydable et leurs alliages ; et
au moins un polymère durcissable,
dans laquelle la composition de joint électrique durcissable a une viscosité d'environ 10 000 à 250 000 cps.

2. Composition selon la revendication 1, dans laquelle la composition comprend le métal électriquement conducteur à une concentration d'environ 40 à 60 % en poids.

3. Composition selon la revendication 1 ou 2, dans laquelle l'au moins un métal électriquement conducteur est une poudre ayant une distribution granulométrique D₅₀ d'environ 1 à 20 µm ; de préférence, dans laquelle l'au moins un métal électriquement conducteur a une distribution granulométrique D₅₀ d'environ 5 à 15 µm.

4. Composition selon l'une quelconque des revendications 1 à 3, dans laquelle la composition comprend un élastomère à faible dureté ; ou dans laquelle la composition a une viscosité d'environ 100 000 à 200 000 cps.

5. Composition selon l'une quelconque des revendications 1 à 4, dans laquelle la composition de joint électrique durcissable comprend en outre un additif de durcissement choisi dans le groupe constitué par un catalyseur, un durcisseur, un agent de réticulation, un agent de séchage, un métal de durcissement, un peroxyde de durcissement et leurs combinaisons ; de préférence dans laquelle la composition de joint électrique durcissable comprend le platine.

6. Composition selon l'une quelconque des revendications 1 à 5, dans laquelle la composition de joint électrique durcissable comprend une température de durcissement d'environ 20 à 30 °C, ou
dans laquelle la composition de joint électrique durcissable, après durcissement, comprend une résistance à l'arrachement comprise entre 0,5 N/mm² et 50 N/mm².

7. Ensemble de joint électrique, comprenant :
deux conducteurs métalliques ou plus ; et
la composition de joint électrique durcissable selon l'une quelconque des revendications 1 à 6, disposée entre les deux conducteurs métalliques ou plus ;
de préférence, dans lequel les deux conducteurs métalliques ou plus comprennent de l'aluminium.

8. Ensemble de joint électrique durci, comprenant :
deux conducteurs métalliques ou plus ; et
la composition de joint électrique durcissable selon l'une des revendications 1 à 6, durcie et disposée entre les deux conducteurs métalliques ou plus ;
dans lequel la composition de joint électrique durci fixe les deux conducteurs métalliques ou plus ensemble.

9. Ensemble de joint électrique durci selon la revendication 8, dans lequel la composition de joint électrique durci comprend une résistance électrique d'environ 150 à 1 500 µOhms à une charge de boulonnage d'environ 1 à 4 kN ; ou dans lequel la composition de joint électrique durci comprend une résistance électrique de tout au plus environ 10 µOhms à une charge de boulonnage d'environ 7 à 10 kN.

10. Dispositif comprenant l'ensemble de joint électrique durci selon la revendication 8 ou 9, dans lequel le dispositif est choisi dans le groupe constitué par un groupe motopropulseur de véhicule, un dispositif de stockage d'énergie, un dispositif solaire et un dispositif de composants électriques de serveur.

11. Procédé de fixation d'un premier conducteur métallique à un deuxième conducteur métallique, comprenant le fait de :
appliquer la composition de joint électrique durcissable selon l'une quelconque des revendications 1 à 6 à un premier conducteur métallique ; et
mettre en contact un deuxième conducteur métallique avec la composition de joint électrique durcissable et le premier conducteur métallique.

12. Procédé selon la revendication 11, comprenant en outre le fait de compresser la composition de joint électrique durcissable entre le premier conducteur métallique et le deuxième conducteur métallique ; de préférence, dans laquelle la compression comprend le fait d'appliquer une force d'environ 7 à 10 kN.

13. Procédé selon la revendication 11, dans lequel la composition de joint électrique durcissable est appliquée par extrusion, à l'aide d'un écran, d'un pochoir, par distribution, par revêtement au trempé, par revêtement par pulvérisation, à l'aide d'une buse, d'un aérosol, d'un jet d'encre, par gravure, par impression flexographique, manuellement, et leurs combinaisons ; de préférence dans lequel la composition de joint électrique durcissable est appliquée sous la forme d'un réseau de points sur la surface d'au moins l'un des deux conducteurs métalliques ou plus ; de préférence dans lequel le réseau de points a une taille comprise entre 10 microns et 12 microns.

14. Procédé de durcissement de l'ensemble de joint électrique selon la revendication 7, comprenant le fait d'application au moins l'une parmi de la chaleur, de la lumière, une pression, et leurs combinaisons, à l'ensemble de joint électrique ; de préférence dans lequel le durcissement est effectué à une température d'environ 20 à 30 °C.

15. Procédé selon l'une quelconque des revendications 11 à 13, comprenant en outre le fait de boulonner le premier conducteur métallique au deuxième conducteur métallique.
